# EUROPÄISCHE PATENTSCHRIFT

(11) **EP 3 015 155 B1**
(45) Veröffentlichungstag und Bekanntmachung des Hinweises auf die Patenterteilung: **04.12.2019**
(21) Anmeldenummer: 14190867.3
(22) Anmeldetag: 29.10.2014
(51) Int. Cl.: B01D 46/52

(54) **FILTERELEMENT MIT AKTIVKOHLESCHICHT**
FILTER ELEMENT WITH ACTIVE CARBON LAYER
ÉLÉMENT FILTRANT AVEC COUCHE À CHARBON ACTIF

(43) Veröffentlichungstag der Anmeldung: 04.05.2016
(73) Patentinhaber: Carl Freudenberg KG, 69469 Weinheim (DE)
(72) Erfinder: Pfeuffer, Peter, 68775 Ketsch (DE); Dobner, Roland, 69483 Wald-Michelbach (DE); Poh, Ralf Dieter, 67434 Neustadt (DE); Krambs, Christoph, 69120 Heidelberg (DE); Häfner, Uwe, 77964 Kehl (DE)

(56) Entgegenhaltungen:
- DE-A1- 19 844 874
- DE-B4- 10 249 577
- DE-U1- 29 901 275

## Beschreibung

### Technisches Gebiet

Die Erfindung betrifft ein Filterelement nach dem Oberbegriff des Patentanspruchs 1.

### Stand der Technik

Aus dem Stand der Technik, insbesondere aus den Druckschriften DE 103 24 341 B3, DE 102 49 577 B4 und der JP 2006 271 567 A, sind sogenannte Kombifilter bekannt, welche mindestens eine partikelfilternde Vliesstofflage und eine Gas adsorbierende Aktivkohleschicht aufweisen.

Die Aktivkohle liegt häufig in Form eines Granulats auf einer Vliesstofflage auf oder ist zwischen zwei Vliesstofflagen eingebettet. Die Vliesstofflagen können gemeinsam mit der Aktivkohleschicht gefaltet werden, um einen Faltenbalg zu bilden. Ein solcher Faltenbalg weist an zwei seiner Enden Endfalten auf.

Bei Kombifiltern, die mit einer Kantenleimtechnik hergestellt werden, ist es erforderlich, Endfalten so abzudichten, dass keine Aktivkohlepartikel herausfallen.

Diesem Problem wurde bereits begegnet, indem eine Lasche über eine offene Kante einer Endfalte gelegt wurde.

Des Weiteren ist es bekannt, Endfalten thermisch, insbesondere durch Ultraschall, zu verschweißen. Thermische und/ oder mechanische Endfaltenversiegelungen sind bei Vorliegen einer dicken Aktivkohleschicht häufig fehlerbehaftet, da kein ausreichend dickes Schweißgut zur Versiegelung zur Verfügung steht. Dieser Effekt ist bei größeren Dicken besonders ausgeprägt. Hiermit gehen qualitative Mängel einher.

Die Ausbildung eines Endfaltenauslaufs erfolgt prozessbedingt nämlich nicht in einem Faltental oder einer Faltenspitze. So wird häufig eine schräge Schnittfläche an einer Schnittkante erzeugt, an der Aktivkohle freigelegt wird. Eine außerhalb angeordnete Vliesstofflage kann die Aktivkohleschicht nicht ausreichend überlappen, so dass kein Schweißgut zur Verfügung steht. Derzeit wird daher Aktivkohle an der offenen Kante, nämlich der Schnittkante, ausgekratzt, um dort Vliesstofflagen zum Verschweißen freizulegen.

Es ist auch bereits bekannt, eine Kleberraupe auf eine offene Kante einer Endfalte aufzubringen, um diese abzudichten. Eine solche Kleberraupe kann mit einer endseitigen Vliesstofflage, nämlich einem Kantenstreifen, kombiniert werden. Nachteilig bei der Verwendung einer Kleberraupe ist die Verminderung der eigentlichen Filterfunktion der Aktivkohleschicht. Bei Kleberanhäufungen kann es zu Leckagestellen kommen. Hierzu kann es insbesondere an Rändern kommen.

### Darstellung der Erfindung

Der Erfindung liegt vor diesem Hintergrund die Aufgabe zu Grunde, ein Filterelement anzugeben, welches nach kostengünstiger und problemloser Fertigung in einem Endbereich möglichst derart abgedichtet ist, dass keine Aktivkohlepartikel aus diesem herausrieseln und die Filterfunktion der Aktivkohle möglichst wenig beeinträchtigt ist.

Erfindungsgemäß wird die voranstehende Aufgabe mit den Merkmalen des Patentanspruchs 1 gelöst.

Erfindungsgemäß ist zunächst erkannt worden, dass mit sehr feinen Fäden ein Gespinst erzeugt werden kann. Darauf ist erkannt worden, dass eine offene Kante, insbesondere eine Schnittkante, mit solchen Fäden derart abgedichtet werden kann, dass keine Aktivkohlepartikel aus der Kante herausrieseln können. Die offene Kante kann so durch ein Gespinst gut abgedichtet werden. Das durch das Gespinst entstehende Versiegelungsbild ist typisch für das hierbei verwendete Verfahren zur Abdichtung der Kante. Bei diesem Verfahren wird ein Endbereich nicht verschweißt, mit einer Vliesstofflage überklebt oder in eine Klebermasse eingetaucht, sondern kostengünstig mit einem feinen Gespinst aus feinen Fäden, insbesondere Hotmeltfäden, abgedichtet.

Das Gespinst wird so gesponnen, dass es wie ein Filtermedium wirkt. Dabei hat sich herausgestellt, dass die Aktivkohlepartikel trotz visuell sichtbarer Freiräume/ Filterporen zischen den Fäden effektiv am Herausrieseln gehindert werden. Das feine Gespinst reicht aus, um die Sauberkeitsanforderungen in Bezug auf Aktivkohlepartikel zu erfüllen. Die offene Struktur des Gespinsts schränkt die filternde Wirkung der Aktivkohle im Endbereich nahezu nicht ein.

Folglich ist die eingangs genannte Aufgabe gelöst.

Das Filterelement kann als Stanzling, als Tasche oder als tiefgezogenes Teil ausgestaltet sein.

Das Filterelement könnte einen Faltenbalg umfassen, der die Aktivkohleschicht aufweist, wobei der Faltenbalg mindestens eine Endfalte aufweist, die mit der Kante versehen ist. Ein Faltenbalg stellt auf engem Raum besonders viel Filtermedium zur Verfügung. Des Weiteren kann eine Endfalte besonders vorteilhaft und problemlos abgedichtet werden, ohne die Filterfunktion des Filterelements mehr als notwendig zu beeinträchtigen.

Die Fäden könnten aus einem Klebstoff oder einem heiß schmelzenden Klebstoff, nämlich einem sogenannten Hotmelt, bestehen. Eine offene Kante einer Endfalte, insbesondere eine Schnittkante, kann mit Hotmeltfäden derart abgedichtet werden, dass keine Aktivkohlepartikel aus der Endfalte herausrieseln können. Die offene Kante der Endfalte kann so durch ein Klebergespinst gut abgedichtet werden. Das durch das Klebergespinst entstehende Versiegelungsbild ist typisch für das hierbei verwendete Verfahren zur Abdichtung der Endfalte.

Vor diesem Hintergrund sind die Fäden durch eine Sprühdüse aufgetragen. Sprühfäden werden in fein definierter Menge aufgetragen.

Die Kante könnte als zumindest bereichsweise parallel zu den Faltentälern und Faltenspitzen verlaufende Schnittkante ausgebildet sein. Hierdurch kann ein Aktivkohle enthaltender Faltenbalg zugeschnitten und versiegelt werden.

Die Aktivkohleschicht könnte zwischen zwei Lagen sandwichartig aufgenommen sein. Hierdurch wird die Aktivkohle zusammengehalten.

Die Fäden könnten die beiden Lagen im Bereich der Kante zumindest soweit bedecken, dass das Gespinst genügend haftet. Hierdurch treten nahezu keine Leckagen auf, durch die Aktivkohlepartikel austreten können. Das Gespinst bildet eine Gespinstlage nicht nur auf der Kante aus, sondern schmiegt sich auch an die beiden Ränder der Lagen an und ist so mit diesen dichtend verbunden. Anderenfalls bestünde die Gefahr einer Leckage.

Die Lagen könnten aus Vliesstoff gefertigt sein. Mit Vliesstoff lassen sich gut Partikel filtern.

Der Faltenbalg könnte durch Kantenstreifen gesäumt sein, die orthogonal zur Kante orientiert sind. Die Kantenstreifen verhindern, dass Aktivkohle seitlich aus dem Faltenbalg austritt.

Die Endfalte könnte konvex nach außen gewölbt sein. Hierdurch kann die Endfalte unter einer Vorspannung stehend dichtend an ein Filtergehäuse angelegt werden, ohne dass die Endfalte Wellen oder Falten schlägt. Das Gespinst unterstützt kombinatorisch die abdichtende Wirkung der konvex gewölbten Endfalte.

Ein Verfahren zum Versiegeln der Kante eines Filterelements der hier beschriebenen Art umfasst den Schritt des Aufbringens von feinen Fäden in Form eines Gespinsts auf die Kante.

Bei diesem Verfahren wird ein Endbereich nicht verschweißt, mit einer Vliesstofflage überklebt oder in eine Klebermasse eingetaucht, sondern kostengünstig mit einem feinen Gespinst aus feinen Fäden, insbesondere Hotmeltfäden, abgedichtet.

Die Fäden werden mittels einer Sprühdüse aufgetragen. Mit einer speziellen Sprühdüse können sehr feine Hotmeltfäden aufgetragen werden. Eine zuvor offene Kante einer Endfalte, nämlich die Schnittkante, ist mit den Hotmeltfäden derart abgedichtet, dass keine Aktivkohlepartikel aus der Endfalte herausrieseln können.

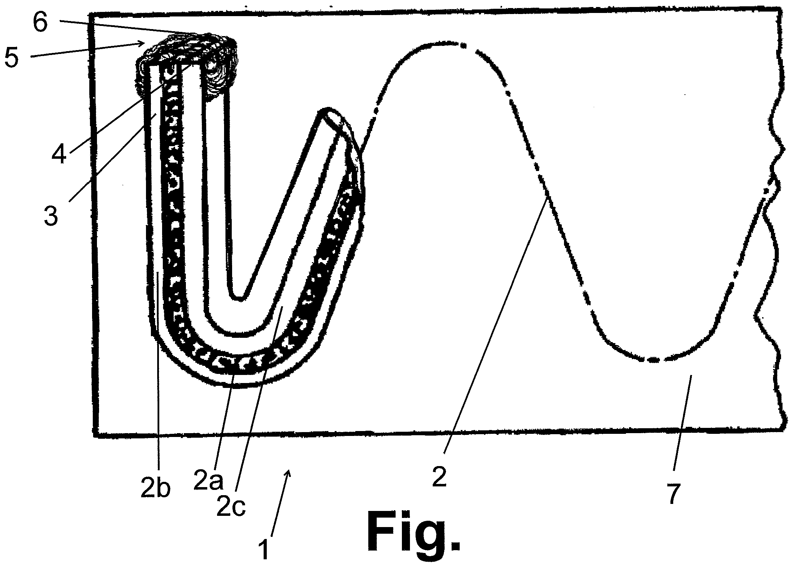

### Kurzbeschreibung der Zeichnung

In der Zeichnung zeigt die einzige
- Fig.: eine schematische teilweise dargestellte Schnittansicht eines Filterelements mit einer Endfalte, bei der eine Kante, nämlich eine Schnittkante, durch ein Gespinst aus Fäden aus Hotmeltklebstoff verschlossen ist.

### Ausführung der Erfindung

Die einzige Fig. zeigt ein Filterelement 1, umfassend eine Aktivkohleschicht 2a, wobei die Aktivkohleschicht 2a in eine Kante 4 mündet. Die Kante 4 weist ein Gespinst 5 aus Fäden 6 auf, welches zur Verhinderung eines Austritts von Aktivkohle aus der Kante 4 angeordnet ist.

Die Fig. zeigt konkret ein Filterelement 1, umfassend einen Faltenbalg 2, der eine Aktivkohleschicht 2a aufweist, wobei der Faltenbalg 2 mindestens eine Endfalte 3 aufweist, die mit einer Kante 4 versehen ist.

Die Kante 4 weist ein Gespinst 5 aus Fäden 6 auf, welches zur Verhinderung eines Austritts von Aktivkohle aus der Kante 4 angeordnet ist. Die Fäden 6 bestehen aus einem Klebstoff. Die Fäden 6 sind durch eine Sprühdüse aufgetragen.

Mit einer speziellen Sprühdüse sind sehr feine Hotmeltfäden aufgetragen worden. Die vormals offene Kante 4 der Endfalte 3, nämlich die Schnittkante, ist mit den Hotmeltfäden derart abgedichtet, dass keine Aktivkohlepartikel aus der Endfalte 3 herausrieseln können.

Die ehemals offene Kante 4 der Endfalte 3 ist so durch das Gespinst 5, nämlich ein Klebergespinst, gut abgedichtet. Das durch das Klebergespinst entstehende Versiegelungsbild ist typisch für das hierbei verwendete Verfahren zur Abdichtung der Endfalte 3.

Bei diesem Verfahren wurde die Endfalte 3 nicht verschweißt, mit einer Vliesstofflage überklebt oder in eine Klebermasse eingetaucht, sondern kostengünstig mit einem feinen Klebergespinst aus feinen Fäden 6, nämlich Hotmeltfäden, abgedichtet.

Diese Fäden 6 sind als Sprühfäden ausgestaltet, die in fein definierter Menge aufgetragen sind. Das feine Klebergespinst reicht aus, um die Sauberkeitsanforderungen in Bezug auf Aktivkohlepartikel zu erfüllen.

Die Kante 4 ist als zumindest bereichsweise parallel zu den Faltentälern und Faltenspitzen verlaufende Schnittkante ausgebildet. Die Aktivkohleschicht 2a ist zwischen zwei Lagen 2b, 2c sandwichartig aufgenommen. Die Fäden 6 bedecken die beiden Lagen 2b, 2c im Bereich der Kante 4 zumindest soweit dass das Gespinst 5 genügend haftet. Die Lagen 2b, 2c sind aus Vliesstoff gefertigt.

Der Faltenbalg 2 ist durch Kantenstreifen 7 gesäumt, die orthogonal zur Kante 4 orientiert sind. Die Kantenstreifen 7 bestehen ebenfalls aus Vliesstoff und sind auf den Faltenbalg 2 aufgeklebt.

Die Endfalte 3 ist konvex nach außen, nämlich vom Faltenbalg 2 weg, gewölbt. Der Endfalte 3 liegt am anderen Ende des Faltenbalgs 2 eine identische Endfalte gegenüber. Diese ist in gleicher Weise abgedichtet und ausgebildet.

## Patentansprüche

1. Filterelement (1), umfassend eine Aktivkohleschicht (2a), wobei die Aktivkohleschicht (2a) in eine Kante (4) mündet, wobei die Kante (4) ein Gespinst (5) aus Fäden (6) aufweist, weiches zur Verhinderung eines Austritts von Aktivkohle aus der Kante (4) angeordnet ist, **dadurch gekennzeichnet, dass** die Fäden (6) aus einem Klebstoff oder einem heiß schmelzenden Klebstoff bestehen und durch eine Sprühdüse aufgetragen sind.

2. Filterelement nach Anspruch 1, **gekennzeichnet durch** einen Faltenbalg (2), der die Aktivkohleschicht (2a) aufweist, wobei der Faltenbalg (2) mindestens eine Endfalte (3) aufweist, die mit der Kante (4) versehen ist

3. Filterelement nach Anspruch 2, **dadurch gekennzeichnet, dass** die Kante (4) als zumindest bereichsweise parallel zu den Faltentälern und Faltenspitzen verlaufende Schnittkante ausgebildet ist.

4. Filterelement nach einem der voranstehenden Ansprüche, **dadurch gekennzeichnet, dass** die Aktivkohleschicht (2a) zwischen zwei Lagen (2b, 2c) sandwichartig aufgenommen ist.

5. Filterelement nach Anspruch 4, **dadurch gekennzeichnet, dass** die Fäden (6) die beiden Lagen (2b, 2c) im Bereich der Kante (4) zumindest soweit bedecken, dass das Gespinst (5) genügend haftet.

6. Filterelement nach Anspruch 4 oder 5, **dadurch gekennzeichnet, dass** die Lagen (2b, 2c) aus Vliesstoff gefertigt sind.

7. Filterelement nach einem der Ansprüche 2 bis 6, **dadurch gekennzeichnet, dass** der Faltenbalg (2) durch Kantenstreifen (7) gesäumt ist, die orthogonal zur Kante (4) orientiert sind.

8. Filterelement nach einem der Ansprüche 2 bis 7, **dadurch gekennzeichnet, dass** die Endfalte (3) konvex nach außen gewölbt ist.

9. Verfahren zum Versiegeln einer Kante (4) eines Filterelements (1) nach einem der voranstehenden Ansprüche, umfassend den Schritt des Aufbringens von feinen Fäden (6) in Form eines Gespinsts (5) auf die Kante (4), wobei die Fäden (6) aus einem Klebstoff oder einem heiß schmelzenden Klebstoff bestehen und mittels einer Sprühdüse aufgetragen werden.

## Claims

1. Filter element (1), comprising an active carbon layer (2a), the active carbon layer (2a) merging into an edge (4), the edge (4) comprising a spun yarn (5) of threads (6), which is arranged to prevent any escape of active carbon from the edge (4), **characterized in that** the threads (6) consist of an adhesive or a hot-melt adhesive and are applied through a spray nozzle.

2. Filter element according to Claim 1, **characterized by** a bellows (2), which comprises the active carbon layer (2a), the bellows (2) having at least one end fold (3), which is provided with the edge (4).

3. Filter element according to Claim 2, **characterized in that** the edge (4) is formed as a cut edge running at least in certain regions parallel to the fold troughs and fold peaks.

4. Filter element according to one of the preceding claims, **characterized in that** the active carbon layer (2a) is incorporated between two plies (2b, 2c) in a sandwich-like manner.

5. Filter element according to Claim 4, **characterized in that** the threads (6) cover the two plies (2b, 2c) in the region of the edge (4) at least to the extent that the spun yarn (5) bonds sufficiently.

6. Filter element according to Claim 4 or 5, **characterized in that** the plies (2b, 2c) are produced from nonwoven fabric.

7. Filter element according to one of Claims 2 to 6, **characterized in that** the bellows (2) are bordered by edge strips (7), which are oriented orthogonally in relation to the edge (4).

8. Filter element according to one of Claims 2 to 7, **characterized in that** the end fold (3) is curved convexly outwards.

9. Method for sealing an edge (4) of a filter element (1) according to one of the preceding claims, comprising the step of applying fine threads (6) in the form of a spun yarn (5) to the edge (4), the threads (6) consisting of an adhesive or a hot-melt adhesive and being applied by means of a spray nozzle.

## Revendications

1. Élément filtrant (1), comprenant une couche à charbon actif (2a), dans lequel la couche à charbon actif (2a) débouche dans un bord (4), dans lequel le bord (4) comporte un voile (5) de fibres (6), lequel est agencé pour empêcher le charbon actif de s'échapper du bord (4), **caractérisé en ce que** les fibres (6) consistent en une colle ou une colle fondant à chaud et sont appliquées par une buse de pulvérisation.

2. Élément filtrant selon la revendication 1, **caractérisé par** un soufflet pliant (2), lequel comprend la couche à charbon actif (2a), dans lequel le soufflet pliant (2) comporte au moins un pli d'extrémité (3), lequel est placé sur le bord (4).

3. Élément filtrant selon la revendication 2, **caractérisé en ce que** le bord (4) est réalisé comme bord découpé au moins partiellement parallèle aux creux de plis et aux crêtes de plis.

4. Élément filtrant selon l'une des revendications précédentes, **caractérisé en ce que** la couche à charbon actif (2a) est logée en sandwich entre deux épaisseurs (2b, 2c).

5. Élément filtrant selon la revendication 4, **caractérisé en ce que** les fibres (6) recouvrent les deux épaisseurs (2b, 2c) dans la zone du bord (4) au moins jusqu'à adhérence suffisante du voile (5).

6. Élément filtrant selon la revendication 4 ou 5, **caractérisé en ce que** les épaisseurs (2b, 2c) sont fabriquées en étoffe non tissée.

7. Élément filtrant selon l'une des revendications 2 à 6, **caractérisé en ce que** le soufflet pliant (2) est bordé par des bandes de bord (7) qui sont orientées de manière orthogonale au bord (4).

8. Élément filtrant selon l'une des revendications 2 à 7, **caractérisé en ce que** le pli d'extrémité (3) est voûté de façon convexe vers l'extérieur.

9. Procédé de scellement d'un bord (4) d'un élément filtrant (1) selon l'une des revendications précédentes, comprenant l'étape d'application de fibres fines (6) sur le bord (4) sous forme d'un voile (5), dans lequel les fibres (6) consistent en une colle ou une colle fondant à chaud et sont appliquées au moyen d'une buse de pulvérisation.
